# EUROPÄISCHE PATENTANMELDUNG

(11) **EP 4 604 335 A1**
(43) Veröffentlichungstag der Anmeldung: **20.08.2025**
(21) Anmeldenummer: 25156433.2
(22) Anmeldetag: 07.02.2025
(51) Int. Cl.: H01R 43/00, H01R 12/63, H01R 43/16, H01R 4/18, H01R 12/59

(54) **REPARATURVERFAHREN FÜR EINEN ELEKTRISCHEN VERBINDER, ELEKTRISCHER VERBINDER UND BATTERIEMODUL**

(30) Priorität: 16.02.2024 DE 102024000499
(71) Anmelder: Mercedes-Benz Group AG, 70372 Stuttgart (DE)
(72) Erfinder: ZMELTY, Janosch Sebastian, 70197 Stuttgart (DE)
(74) Vertreter: Weller, Jürgen

(57) **Zusammenfassung**

Die Erfindung betrifft ein Reparaturverfahren für einen elektrischen Verbinder (100) mit einem Leitungselement (1), welches über ein Verbindungspad (3) mit einem elektrischen oder elektronischen Bauteil (5) fest verbunden ist. Das erfindungsgemäße Reparaturverfahren ist dadurch gekennzeichnet, dass der elektrische Verbinder (100) im Bereich des Verbindungspads (3) aufgetrennt wird, wonach aus dem mit dem Bauteil (5) verbundenen Teil des Verbindungspads (3) eine neue Kontur für ein späteres Crimpen ausgeschnitten wird, wonach Abschnitte (8, 9) der Kontur wannenförmig gebogen werden, und wonach ein Rundleiter (11) als Ersatz für das Leitungselement (1) durch Crimpen mit dem Verbindungspad (3) elektrisch kontaktiert und mechanisch verbunden wird. Die Erfindung betrifft außerdem einen hierfür geeigneten elektrischen Verbinder (100) sowie eine Batteriemodul mit einem solchen elektrischen Verbinder (100).

## Beschreibung

Die Erfindung betrifft ein Reparaturverfahren für einen elektrischen Verbinder nach der im Oberbegriff von Anspruch 1 näher definierten Art. Außerdem betrifft die Erfindung einen für das Reparaturverfahren geeigneten elektrischen Verbinder sowie ein Batteriemodul mit wenigstens einem solchen elektrischen Verbinder.

Elektrische Verbinder werden heute häufig über flexible Leitungselemente bzw. flexible Leiterplatten realisiert, welche eine oder mehrere Leiterbahnen aufweisen. Solche flexiblen Leitungselemente werden in der Praxis auch als Flexfolien oder in Anlehnung an den englischen Begriff "flexible printed circuit" als FPC-Verbinder bezeichnet. Sie haben vielfältige Vorteile gegenüber klassischen Rundleitern bzw. Kabeln. Sie sind relativ leicht und billig, brauchen wenig Bauraum und alle Leiterbahnen befinden sich immer an derselben definierten Position. Um die (einzelnen) flexiblen Leitungselemente einfach mit elektrischen oder elektronischen Bauteilen verbinden zu können, sind die Enden der flexiblen Leitungselemente häufig mit sogenannten Verbindungspads oder Schweißpads versehen. Das sind vergrößerte Abschnitte, welche einteilig mit den flexiblen Leitungselementen ausgebildet sind oder bei der Herstellung derselben mit diesen verbunden werden.

Ein Nachteil derartiger elektrischer Verbinder auf der Basis von flexiblen Leitungselementen ist es jedoch, dass sie bei Knicken und Stößen gegen Kanten relativ empfindlich sind, da die einzelnen Leiterbahnen selbst typischerweise sehr dünn ausgeführt sind. Zudem kann es aufgrund von Vorschädigungen in der Produktion und/oder aufgrund einer Verjüngung der Leiterbahnen nach einer starken der thermischen Ausdehnung zu Brüchen kommen. Gelegentlich sind die flexiblen Leitungselemente auch alterungsanfällig, sodass das die Leiterbahnen tragende Material über die Zeit versprödet und es deshalb zu Brüchen kommen kann. Dies gilt insbesondere dann, wenn zusätzlich Knicke, Stöße oder Vibrationen auftreten. Darüber hinaus ist es so, dass ein Reparaturbedarf an einer der über die elektrischen Verbinder angebundenen Komponenten es notwendig machen kann, dass das flexible Leitungselement des elektrischen Verbinders teilweise oder komplett entfernt wird.

Häufig ist es so, dass die flexiblen Leitungselementen mit ihren Verbindungspads an den einzelnen Anschlusspunkten zu den elektrischen oder elektronischen Bauteilen mit diesen verschweißt sind. Typischerweise werden hier singuläre Laserschweißpunkte eingesetzt, welche innerhalb des zur Verfügung stehenden Bauraums einfach und effizient eine gute mechanische und elektrische Anbindung ermöglichen. Dies führt jedoch dazu, dass die flexiblen Leitungselemente nicht entfernbar sind, solange die Schweißverbindung selbst, zum Beispiel aufgrund einer schlechten Erreichbarkeit, nicht erneuert werden kann. Auch erfordert das erneute Anbringen der Schweißverbindung einen entsprechenden vorrichtungsgemäßen Aufwand, sodass, selbst wenn diese erneuert werden kann, die Reparatur typischerweise nur in einem industriellen Umfeld zuverlässig möglich ist.

In der Praxis führt dies dazu, dass im Falle eines Defekts häufig das komplette System ausgetauscht werden muss. Aufgrund eines verhältnismäßig günstigen Bauteils entstehen so hohe Ausfallkosten. Dies gilt insbesondere, aber nicht ausschließlich, für Batterieanwendungen, bei dem die elektrischen Verbinder typischerweise fest mit den Batterieeinzelzellen verschweißt sind, sodass hier typischerweise ein Defekt des elektrischen Verbinders stets zu einem Austausch des kompletten Zellmoduls führt. Dies verursacht im Reparaturfall deutlich höhere Materialkosten als notwendig, da die Kosten für ein flexibles Leitungselement, z.B. zum Zellspannungsabgriff, sehr viel geringer als die Kosten der Batterieeinzelzellen sind. Eine prinzipielle Lösung könnte es daher vorsehen, dass der komplette flexible elektrische Verbinder, typischerweise der komplette flexible Leitersatz einer Batterie entfernt und anschließend wieder angebracht wird. Dies erfordert jedoch ein Design des Batteriemoduls, welches eine uneingeschränkte Zugänglichkeit zu den einzelnen elektrischen Anbindungsstellen ermöglicht, da typischerweise eine Vorbehandlung der Schweißfläche und ein nachfolgendes erneutes Anschweißen der Leiterbahnen bzw. Verbindungspads erfolgen muss. Der Aufwand für eine solche Reparatur, welcher typischerweise auch nur im industriellen Umfeld zu realisieren ist, ist häufig so hoch, dass der monetäre Vorteil der Reparatur gegenüber einem Komplettaustausch minimal oder gar nicht erst vorhanden ist. Die CN 214 849 442 U beschreibt eine Lösung, bei welcher an die Stelle der Schweißverbindungen Steckverbinder treten, sodass die kompletten flexiblen Leitungselemente als Ganzes ausgetauscht werden können. Derartige Steckverbinder haben jedoch andere Nachteile. Im Gegensatz zu einer Schweißverbindung ist die Zuverlässigkeit durch weitaus mehr verschiedene Parameter beeinflusst. Die Stecker müssen also entsprechend hochwertig sein, um eine der Schweißverbindung vergleichbare elektrische Verbindung realisieren zu können. Sie müssen zum Einstecken der mit den Leiterbahnen verbundenen Steckelemente einfach zugänglich sein und benötigen dementsprechend viel Bauraum. Darüber hinaus sind sie in der Montage aufwändiger, bringen zusätzliches Gewicht in das initiale System ein und verursachen zusätzliche Kosten.

Die US 6,830,176 B2 beschreibt ein Verfahren zur Reparatur eines flexiblen Leiters, welcher sich durch isolierte und nicht isolierte Abschnitte seiner einzelnen Leiterbahnen auszeichnet. Bei Bedarf kann der elektrische Leiter aufgetrennt werden. Danach kann der flexible Leiter über ein spezielles Verbindungselement repariert werden, welches jeweils mit den der Trennstelle benachbarten nächstliegenden nicht isolierten Abschnitten verlötet wird. Das Verbindungselement bildet dann eine eingelötete Überbrückung für den Trennschnitt in dem flexiblen Leitungselement. Dabei ist es so, dass die nicht isolierten Bereiche die Gefahr einer elektrischen Kontaktierung mit der Umgebung verursachen, was unerwünscht ist. Zur Reparatur eines solchen flexiblen Leiters müssen dann außerdem beide betroffenen Stellen für ein erneutes Verlöten zugänglich sein. Wie es auch in der US-Schrift selbst beschrieben wird, ist bei dicht nebeneinander liegenden Leiterbahnen die exakte Positionierung des aufzulötenden Verbindungselements sehr aufwändig. Dies ist jedoch unumgänglich, um potenzielle Kurzschlüsse und falsch verbundene Leiterbahnen sicher auszuschließen.

Die Aufgabe der hier vorliegenden Erfindung besteht deshalb darin, ein sehr einfaches und zuverlässiges Reparaturverfahren für derartige elektrische Verbinder mit einem Leitungselement, welches über ein Verbindungspad mit einem elektrischen oder elektronischen Bauteil fest verbunden ist, anzugeben.

Erfindungsgemäß wird diese Aufgabe durch ein Reparaturverfahren mit den Merkmalen im Anspruch 1, und hier insbesondere im kennzeichnenden Teil des Anspruchs 1, gelöst. Vorteilhafte Weiterbildungen des Reparaturverfahrens ergeben sich aus den hiervon abhängigen Unteransprüchen. Außerdem ist ein für das Reparaturverfahren geeigneter elektrischer Verbinder in Anspruch 4 angegeben, auch hier ergeben sich vorteilhafte Ausgestaltungen aus den abhängigen Unteransprüchen. Aus Anspruch 7 ergibt sich außerdem eine bevorzugte Anwendung für den leicht zu reparierenden elektrischen Verbinder in einem Batteriemodul.

Bei dem erfindungsgemäßen Reparaturverfahren ist es so, dass das vorhandene Verbindungspad genutzt wird, um die elektrische Verbindung zu reparieren. Dafür wird die elektrische Verbindung im Bereich dieses Verbindungspads aufgetrennt, sodass zumindest ein Teil des Verbindungspads, welches fest mit dem elektrischen oder elektronischen Bauteil verbunden ist, an dem elektrischen oder elektronischen Bauteil verbleibt. Dieser mit dem Bauteil verbundene Teil des Verbindungspads wird dann genutzt, um aus ihm eine neue Kontur für ein späteres Crimpen auszuschneiden. Dafür werden also Teile des ursprünglichen Verbindungspads entfernt. Im Anschluss werden Abschnitte dieser Kontur wannenförmig gebogen, um sie für das spätere Crimpen vorzubereiten. Abschließend wird bei dem erfindungsgemäßen Reparaturverfahren ein herkömmlicher Rundleiter als Ersatz für das defekte oder aus anderen Gründen zu entfernende Leitungselement eingesetzt, indem dieser Rundleiter durch Crimpen mit dem Verbindungspad elektrisch kontaktiert und verbunden wird.

Das erfindungsgemäße Reparaturverfahren schafft also aus dem ohnehin vorhandenen und mit dem elektrischen oder elektronischen Bauteil fest kontaktierten Verbindungspad eine Einrichtung, welche mit einem Rundleiter als Ersatz für das Leitungselement vercrimpt werden kann. Das Leitungselement kann so im Reparaturfall durch den Rundleiter ersetzt werden, wobei das Verfahren entsprechend einfach und effizient ist, indem durch das Crimpen eine grundlegend etablierte, robuste und zuverlässige Technik zum Einsatz kommt, welche mit minimalem Vorrichtungsaufwand umgesetzt werden kann.

Die neue Kontur kann dabei gemäß einer sehr vorteilhaften Weiterbildung durch Stanzen ausgeschnitten werden. Ein einfaches Stanzwerkszeug, welches beispielsweise in einer hierfür geeigneten Zange, in der grundlegenden Art einer Lochzange, realisiert werden kann, kann damit genutzt werden, um die für das Crimpen erforderliche neue Kontur aus dem mit dem Bauteil verbundenen an diesen verbleidenden Teil des Verbindungspads auszustanzen.

Dabei ist es prinzipiell so, dass es hier ausreicht die neue Kontur so zu gestalten, dass entsprechende Überstände, welche auch als Doppelflügel bezeichnet werden könnten, zur Verfügung stehen, welche um ein elektrisch leitendes Teil, typischerweise den Innenleiter, des Rundleiters herumgelegt und mit diesem vercrimpt werden können. Dadurch wird einerseits die elektrische Anbindung und Kontaktierung gewährleistet und andererseits eine mechanische Verbindung zwischen dem Rundleiter und dem Verbindungspad und über dieses den mit diesen verbundenen Bauteil geschaffen.

Diese Kontaktierung und Verbindung bietet allerdings nur eine vergleichsweise geringe Zugentlastung des Rundleiters. Gemäß einer bevorzugten Weiterbildung des Reparaturverfahrens gemäß der Erfindung kann die Kontur daher einen Verbindungssteg und zwei Doppelflügel aufweisen, welche dazu ausgebildet sind, nach dem Crimpen den Innenleiter des Rundleiters einerseits und dessen Isolierung andererseits zu umgreifen. Der Doppelflügel, welcher um den Innenleiter gelegt und mit diesem vercrimpt wird, stellt die elektrische Kontaktierung sicher. Der zweite wird um die Isolierung des Rundleiters gelegt und mit dieser Isolierung vercrimpt. Dieser Teil dient zur Verbesserung der Zugentlastung, um eine stabile mechanische Verbindung zu schaffen.

Wie eingangs bereits erwähnt können derartige Verbindungspads einteilig mit einer jeweiligen flexiblen Leiterbahn ausgebildet sein. Das Material des Verbindungspads ist damit dasselbe wie das des flexiblen Leitungselements. Häufig ist dieses für eine Crimpen nur bedingt geeignet. Der elektrische Verbinder gemäß der Erfindung sieht es deshalb vor, dass die Verbindung zwischen dem Verbindungspad und dem flexiblen Leitungselement als eine Verbindung, gemäß einer bevorzugten Weiterbildung insbesondere als eine Löt- oder Schweißverbindung, ausgebildet ist. Der zur Reparatur vorgesehene elektrische Verbinder ist also so ausgestaltet, dass das Leitungselement einerseits und das Verbindungspad andererseits bereits bei der Herstellung oder der Montage des elektrischen Verbinders miteinander verbunden worden sind, insbesondere durch Löten oder Schweißen. Hierdurch entsteht die Möglichkeit für das Verbindungspad ein anderes Material einzusetzen als für das Leitungselement. Dieses Material kann nun insbesondere ein Material sein, welches sich leichter mit dem entsprechenden Bauteil verlöten oder verschweißen lässt, und welches gemäß einer bevorzugten Weiterbildung in der Art ausgebildet ist, dass dieses Material für das spätere Vercrimpen mit einem Rundleiter geeignet ist. Insbesondere kann hier die Materialstärke eine Rolle spielen, welche typischerweise größer als die Materialstärke des flexiblen Leitungselements ausgebildet ist, um eine plastische Verformung und damit das Vercrimpen zu ermöglichen.

Ein erfindungsgemäßes Batteriemodul umfasst nun mehrere Batterieeinzelzellen und wenigstens einem erfindungsgemäßen elektrischen Verbinder.

Das Reparaturverfahren lässt sich damit zur Reparatur von flexiblen Leitungselementen in einem solchen Batteriemodulen einsetzen, welches insbesondere in Traktionsbatterien für elektrische Fahrzeuge verbaut sein kann. Derartige Traktionsbatterien haben einen sehr hohen Kostenanteil an dem Fahrzeug, sodass hier eine einfache und effiziente Reparatur für ein kostengünstiges Verbindungselement, welches ansonsten zu einem Komplettaustausch des Batteriemoduls führen würde, besondere Vorteile bietet. Grundlegend lässt sich das Reparaturverfahren jedoch bei allen derartigen elektrischen Verbindern vorteilhaft einsetzen.

Weitere vorteilhafte Ausgestaltungen des Reparaturverfahrens gemäß der Erfindung ergeben sich auch anhand des Ausführungsbeispiels, welches nachfolgend unter Bezugnahme auf die Figuren näher beschrieben ist.

Dabei zeigen:
- Fig. 1: eine schematische Darstellung der ersten Schritte zur Vorbereitung des Reparaturverfahrens;
- Fig. 2: eine schematische Darstellung weiterer vorbereitender Schritte für das spätere Crimpen; und
- Fig. 3: die Reparatur durch die Verbindung eines Rundleiters über ein Crimpverfahren.

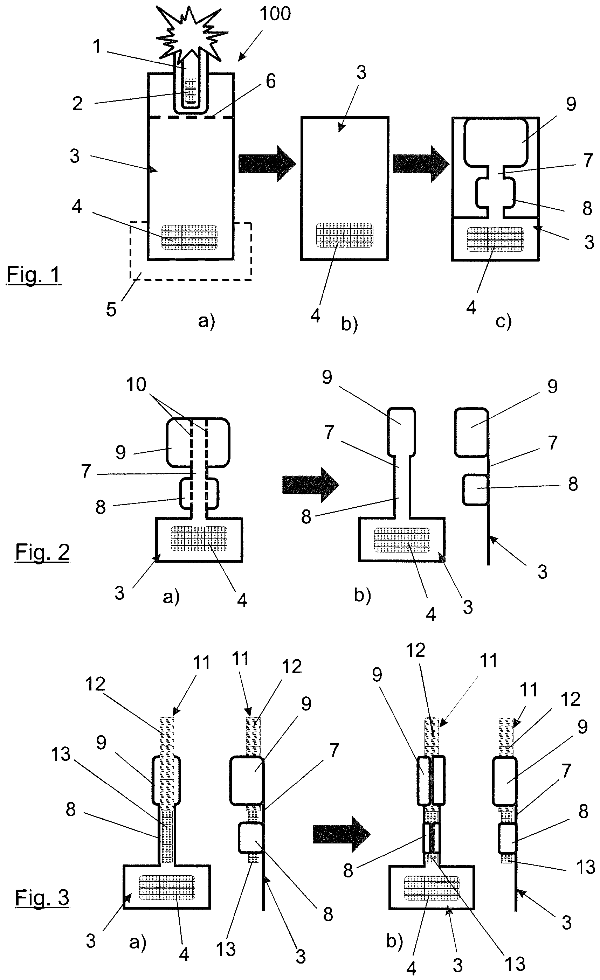

In der Darstellung der Figur 1 ist in der Figur 1a) ein elektrischer Verbinder 100 gezeigt, welcher ein flexibles Leitungselement 1 umfasst, welches an seinem hier unten dargestellten Ende über eine mit 2 bezeichnete Schweißverbindung mit einem Verbindungspad 3, welches auch als Schweißpad bezeichnet wird, verbunden ist. Im Bereich des flexiblen Leitungselements 1 soll nun ein wie auch immer gearteter Defekt vorliegen, sodass hier eine Reparatur der elektrischen Verbindung notwendig ist. Dieser Defekt ist in der Darstellung der Figur 1a) über ein Explosionssymbol angedeutet.

Ein Austausch des kompletten elektrischen Verbinders 100 scheidet hier aus, weil das Verbindungspad 3 über eine mit 4 bezeichnete Schweißverbindung mit einem lediglich in der Figur 1a) angedeuteten Bauteil 5 fest verbunden ist.

Um das Reparaturverfahren vorzubereiten, wird das Verbindungspad 3 nun entlang der in Figur 1a) mit 6 bezeichneten Schnittlinie aufgetrennt. In der Figur 1b) ist dann nur noch der untere an dem Bauteil 5 verbleibende Teil des Verbindungspads 3 übrig. Dieser ist zusammen mit der Schweißverbindung 4 nochmals dargestellt. Um diesen Teil des Verbindungspads 3 nun für ein späteres Crimpen vorzubereiten ist es erforderlich eine neue Kontur aus diesem Verbindungspad 3 auszuschneiden, welche in der Darstellung der Figur 1c) entsprechend angedeutet ist. Dieses Ausschneiden der Kontur, welche in diesem Fall über einen durchlaufenden Verbindungssteg 7 und kleinere und größere Doppelflügel 8, 9 verfügt, kann beispielsweise über ein Stanzwerkzeug realisiert werden.

In der Darstellung der Figur 2a) ist diese neue ausgestanzte Kontur des Verbindungspads 3 zu erkennen. Um die neue Kontur für das Crimpen vorzubereiten, werden die beiden Doppelflügel 8, 9 entlang der gestrichelt eingezeichneten Linien 10 nach oben gebogen, um so jeweils eine Crimpwanne zu schaffen. In der Figur 2b) ist dies in einer Draufsicht und in einer Seitenansicht des verbleibenden Teils des Verbindungspads 3 erkennbar.

In der Darstellung der Figur 3a) wird nun die Darstellung aus Figur 2b) nochmals aufgegriffen. Auf dem verbleibenden Teil des Verbindungspads 3 mit den zwischen den Doppelflügeln 8, 9 geschaffenen Crimpwannen wird nun ein in seiner Gesamtheit mit 11 bezeichneter Rundleiter positioniert. Dieser besteht aus einer äußeren elektrischen Isolierung 12, welche in ihrem Inneren einen mit 13 bezeichneten Innenleiter einschließt. Dieser besteht in dem hier dargestellten Ausführungsbeispiel aus mehreren Einzelleitern. Der an seinem Ende abisolierte Rundleiter 11 wird nun so positioniert, dass der Bereich mit der äußeren Isolierung 12 in der durch die Doppelflügel 9 gebildeten Crimpwanne zu liegen kommt, derjenige mit freiliegendem Innenleiter 13 in der Crimpwanne, welche durch die Doppelflügel 8 ausgebildet wird. In der Darstellung der Figur 3b) ist dann erkennbar, wie der Aufbau nach dem Vercrimpen der Doppelflügel 8, 9 aussieht, auch hier wieder in einer Draufsicht einerseits und einer Seitenansicht andererseits. Der Bereich mit den Doppelflügeln 9 ist dabei um die Isolierung 12 des Rundleiters 11 herum vercrimpt, und sorgt so für eine gute Zugentlastung. Der durch die Doppelflügel 8 ausgebildete Bereich ist um den Innenleiter 13 des Rundleiters 11 herum vercrimpt und schafft einerseits eine gute elektrische Anbindung und kann andererseits ebenfalls zu einem gewissen Teil zur Zugentlastung beitragen. Insgesamt kann so sehr einfach und effizient mit einfachen Werkzeugen, wie einer Stanzzange und einer Crimpzange, die defekte Verbindung des flexiblen Leitungselements 1 durch einen herkömmlichen Rundleiter 11 ersetzt werden.

## Patentansprüche

1. Reparaturverfahren für einen elektrischen Verbinder (100) mit einem Leitungselement (1), welches über ein Verbindungspad (3) mit einem elektrischen oder elektronischen Bauteil (5) fest verbunden ist,
**dadurch gekennzeichnet, dass**
der elektrische Verbinder (100) im Bereich des Verbindungspads (3) aufgetrennt wird, wonach aus dem mit dem Bauteil (5) verbundenen Teil des Verbindungspads (3) eine neue Kontur für ein späteres Crimpen ausgeschnitten wird, wonach Abschnitte (8, 9) der Kontur wannenförmig gebogen werden, und wonach ein Rundleiter (11) als Ersatz für das Leitungselement (1) durch Crimpen mit dem Verbindungspad (3) elektrisch kontaktiert und mechanisch verbunden wird.

2. Reparaturverfahren nach Anspruch 1,
**dadurch gekennzeichnet, dass**
die neue Kontur durch Stanzen ausgeschnitten wird.

3. Reparaturverfahren nach Anspruch 1 oder 2,
**dadurch gekennzeichnet, dass**
eine Kontur verwendet wird, welche einen Verbindungssteg (7) und zwei Doppelflügel (8, 9) aufweist, welche dazu ausgebildet sind, nach dem Crimpen ein Innenleiter (13) des Rundleiters (11) einerseits und dessen Isolierung (12) andererseits zu umgreifen.

4. Elektrischer Verbinder (100) für ein Reparaturverfahren nach einem der Ansprüche 1 bis 3, bei welchem das Verbindungspad (3) mit dem Leitungselement (1) verbunden ist.

5. Elektrischer Verbinder (100) nach Anspruch 4,
**dadurch gekennzeichnet, dass**
die Verbindung (2) zwischen dem Leitungselement (1) und dem Verbindungspad (3) als Löt- oder Schweißverbindung ausgebildet ist.

6. Elektrischer Verbinder (100) nach Anspruch 4 oder 5,
**dadurch gekennzeichnet, dass**
das Verbindungspad (3) aus einem für ein Crimpen geeigneten Material ausgebildet ist.

7. Batteriemodul mit mehreren Batterieeinzelzellen und wenigstens einem elektrischen Verbinder (100) nach einem der Ansprüche 4 bis 7.
